# EUROPÄISCHE PATENTANMELDUNG

(11) **EP 4 349 512 A1**
(43) Veröffentlichungstag der Anmeldung: **10.04.2024**
(21) Anmeldenummer: 22199888.3
(22) Anmeldetag: 05.10.2022
(51) Int. Cl.: B23B 27/00, B23B 51/08, B23D 77/04, B23C 5/10, B23D 13/00, B23B 51/10, B23C 5/22

(54) **ZERSPANUNGSWERKZEUG MIT WEITEREN SCHAFTSEITIGEN NEBEN-ZERSPANUNGSWERKZEUGEN**

(71) Anmelder: HEULE Werkzeug AG, 9436 Balgach (CH)
(72) Erfinder: FÄSSLER, Roman, 9437 Marbach (CH)
(74) Vertreter: Riebling, Peter

(57) **Zusammenfassung**

Zerspanungswerkzeug (4, 5), welches mit seinem Schaft (2, 3) um seine Längsachse (41) drehend oder stossend und ziehend angetrieben ist und am Schaft (2, 3) weitere schaftseitige Neben-Zerspanungswerkzeugen (6, 7, 8 befestigt sind, wobei die Neben-Zerspanungswerkzeuge (6, 7, 8) am Schaft (2, 3) des Zerspanungswerkzeugs (4, 5) auswechselbar befestigt sind.

## Beschreibung

Gegenstand der Erfindung ist ein Zerspanungswerkzeug mit weiteren schaftseitigen Neben-Zerspanungswerkzeugen nach dem Oberbegriff des Patenanspruchs 1.

Mit einer auf den gleichen Anmelder zurückgehenden DE 10 2015 005 250 A1 ist es bekannt, am Schaft eines spanabhebenden Werkzeugs ein zusätzliches Neben-Zerspanungswerkzeug anzubringen, welches in radialer Richtung gerichtet ist und bei Drehung des Haupt-Zerspanungswerkzeuges eine spanabhebende Wirkung in Umfangsrichtung des Haupt-Zerspanungswerkzeugs entfaltet. Die dortige Druckschrift beschreibt ein Bohr-Fas-Kombi-Werkzeug, bei dem am Schaft eines drehend angetriebenen spanabhebenden Hauptwerkzeuges ein zusätzliches spanabhebendes Nebenwerkzeug unlösbar und nicht-auswechselbar befestigt ist.

Ein ähnlicher Stand der Technik ergibt sich aus der DE 92 07 000 U1, die ebenfalls ein Entgratwerkzeug mit einem schaftseitigen, zusätzlichen Neben-Entgratwerkzeug zeigt. Auch hier ist zu entnehmen, dass das zusätzliche Neben-Entgratwerkzeug unmittelbar im schaftseitigen Arbeitsbereich des drehend angetriebenen Haupt-Werkzeuges nicht-auswechselbar befestigt ist.

Nachteil der beiden Ausführungen ist, dass im zylinderförmigen Schaft des Haupt-Zerspanungswerkzeugs zusätzliche spezifische Einbau-Maßnahmen getroffen werden müssen, um das Neben-Zerspanungswerkzeug passgenau zu integrieren. Diese zusätzlichen Maßnahmen müssen an die spezielle Art des Neben-Zerspanungswerkzeugs angepasst sein, was verhindert, dass unterschiedliche Neben-Zerspanungswerkzeuge am gleichen Haupt-Zerspanungswerkzeug verwendet werden können.

Es besteht auch nicht die Möglichkeit der Auswechslung des Neben-Zerspanungswerkzeugs. Bei einem Verschleiß des Neben-Zerspanungswerkzeugs ist ein kompletter Austausch des Hauptwerkzeugs zusammen mit dem Neben-Zerspanungswerkzeug notwendig, was mit hohen Kosten verbunden ist.

Bei einer derartigen Lösung, bei der im Arbeitsbereich des Haupt-Zerspanungswerkzeugs ein Neben-Zerspanungswerkzeug angeordnet ist, besteht beim Stand der Technik demnach der Nachteil, dass es weder auswechselbar ist, noch kann ein spanabhebendes, drehend angetriebenes Hauptwerkzeug mit zusätzlichen radialen Schneidwerkzeugen nachträglich ausgerüstet werden, was in vielen Fällen jedoch erwünscht ist.

Es besteht das Bedürfnis, dass bei einem drehend angetriebenen, spanabhebenden Hauptwerkzeug, insbesondere einem Entgratwerkzeug, z.B. einem Bohrer, einem Fräser oder dgl., einerseits eine nachträgliche Anbringung von zusätzlichen Schneidwerkzeugen möglich sein soll und andererseits auch eine Miniaturisierung in der Weise gegeben sein soll, dass der zylinderförmige Arbeitsbereich des Entgratwerkzeugs durch die zusätzliche Halterung eines Schneidwerkzeuges nicht entscheidend geschwächt oder verändert werden soll.

Der Erfindung liegt deshalb die Aufgabe zugrunde, eine betriebssichere Befestigung eines Neben-Zerspanungswerkzeugs am Schaft eines Haupt-Zerspanungswerkzeugs vorzusehen.

Die Aufgabe wird durch die technischen Merkmale des Anspruches 1 gelöst.

In einer bevorzugten Ausführung ist vorgesehen, dass am Schaft eines Haupt-Zerspanungswerkzeugs je nach Zerspanungsaufgabe unterschiedliche Neben-Zerspanungswerkzeuge auswechselbar anzuordnen sind.

Dabei wird es bevorzugt, wenn jedes Neben-Zerspanungswerkzeug in einem kassettenartigen Aufnahmegehäuse aufgenommen ist, das in einer taschenförmig vertieften Aufnahmeöffnung im Schaft oder in der Wendel eines Zerspanungswerkzeugs lösbar befestigt ist.

Die bevorzugte Ausführung betrifft somit Neben-Zerspanungswerkzeuge, die am Schaft und/oder im spanabhebenden Arbeitsbereich des Zerspanungswerkzeugs auswechselbar befestigt sind.

Bevorzugtes Merkmal der Erfindung ist demnach, dass im Schaft des drehend angetriebenen Haupt-Zerspanungswerkzeugs mindestens einseitig mindestens eine vertiefte, in radialer Richtung geöffnete Aufnahmeöffnung angeordnet ist, in welcher jeweils ein Aufnahmegehäuse lösbar für die Aufnahme eines Neben-Zerspanungswerkzeugs eingesetzt und dort auswechselbar verankert ist.

Dabei wird es bevorzugt, wenn der Ort der Anordnung der mindestens einen schaftseitigen Aufnahmeöffnung im Arbeitsbereich des Haupt-Zerspanungswerkzeugs liegt.

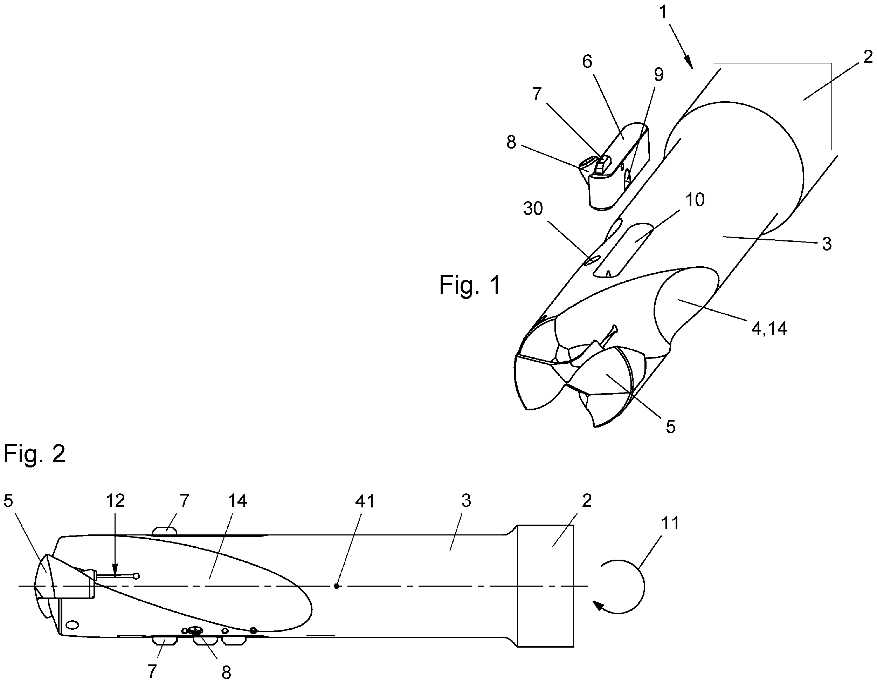

In einer weiteren bevorzugten Ausgestaltung ist vorgesehen, dass im Fall der Ausbildung des Haupt-Zerspanungswerkzeuges als Bohrer die eine oder mehreren kassettenartigen Neben-Zerspanungswerkzeuge im Bereich zwischen den Bohrwendeln angeordnet werden. Dies ist in der Fig.1 der Anmeldung ersichtlich. Dies bietet den Vorteil, dass die Entgratung der Oberseite des Werkstücks bereits während dem Bohrprozess stattfindet, und dadurch die Bohrerlänge entscheidend verkürzt werden kann. Anderenfalls muss die Länge hinter dem Wendelende nochmals die Werkstückdicke betragen, um die rückseitige Entgratung anzubringen.

Der Begriff "Arbeitsbereich" wird in einer bevorzugten Ausgestaltung in der Weise verwendet, dass die erfindungsgemässe mindestens eine Aufnahmeöffnung im Haupt-Zerspanungswerkzeug für die Aufnahme des in radialer Richtung wirkenden Aufnahmegehäuses bevorzugt im Schaftbereich zwischen dem der Einspannung dienenden Werkzeugschaft und dem Bereich für die Spanabfuhr des Haupt-Zerspanungswerkzeugs angeordnet ist. Bevorzugt wird deshalb ein Ort, der oberhalb des der Spanabfuhr dienenden Schaftbereichs und unterhalb dem der Einspannung dienenden Schaftbereichs des Haupt-Zerspanungswerkzeugs angeordnet ist.

Soweit in dem der Einspannung dienenden Schaftbereich des Haupt-Zerspanungswerkzeuges noch - in axialer Richtung nach unten - Platz für eine oder mehrere radial nach außen geöffnete, taschenförmige Aufnahmeöffnungen vorhanden ist, können diese Aufnahmeöffnungen auch in diesem - normalerweise rundzylindrischen - Schaftbereich angeordnet sein.

Die Einbringung solcher taschenförmigen Aufnahmeöffnungen in ein Haupt-Zerspanungswerkzeug kann auf verschiedenartige Weise erfolgen. In der Regel besteht das drehend angetriebene, rundzylindrische Zerspanungswerkzeug aus einem Werkzeugstahl.
Ein Schnellarbeitsstahl ist ein hochlegierter Werkzeugstahl, der hauptsächlich als Schneidstoff genutzt wird, also für Fräswerkzeuge, Bohrer, Drehmeißel und Räumwerkzeuge. Die Bezeichnung bezieht sich auf die gegenüber gewöhnlichem Werkzeugstahl drei- bis viermal höheren Schnittgeschwindigkeiten. Während gewöhnlicher Werkzeugstahl bereits ab etwa 200 °C seine Härte verliert, behält Schnellarbeitsstahl bis etwa 600 °C seine Härte. Die gebräuchlichen Kurzbezeichnungen beginnen mit HSS oder HS, abgeleitet vom englischen High Speed Steel. Deutsche Bezeichnungen sind Hochgeschwindigkeitsstahl, (Hochleistungs-)Schnellschnittstahl, Hochleistungsschnellarbeitsstahl und Hochleistungsschnittstahl.

Die Einbringung der ein oder mehreren taschenförmigen Aufnahmeöffnungen in den Schaft eines solchen Haupt-Zerspanungswerkzeug kann dabei durch Funkenerodierung, Laserbehandlung oder dgl. erfolgen Bei der Funkenerodierung wird das Elektrodenwerkzeug bis auf 0,004 bis 0,5 mm an das Werkstück herangeführt. Im richtigen Moment wird der Überschlag von Funken durch eine Erhöhung der anliegenden Spannung herbeigeführt. Die Funken lassen das Material punktförmig aufschmelzen und verdampfen. Das Abtragsergebnis wird von Intensität, Frequenz, Dauer, Länge, Spaltbreite und Polung der Entladungen beeinflusst. Das Werkzeug wird mit Hilfe einer CNC-Steuerung bewegt. Es lassen sich komplexe geometrische Formen herstellen.

Die Anbringung der ein oder mehreren schaftseitigen Aufnahmeöffnungen kann bevorzugt auch vor einer eventuellen Härtebehandlung des Zerspanungswerkzeuges erfolgen, weil dann die Anbringung der Aufnahmeöffnung(en) im weicheren, noch ungehärteten Stahlmaterial erfolgen kann.

Eine andere bevorzugte Herstellungsmethode ist das 3D-Laserschmelzverfahren, bei dem das Zerspanungswerkzeug in einem additiven Schmelzvorgang Schicht für Schicht hergestellt wird. In einem solchen Verfahren können von vorneherein die in radialer Richtung vertieft angelegten schaftseitigen Aufnahmeöffnungen vorgesehen sein, ohne dass es einer nachträglichen spanabhebenden Bearbeitung zur Herstellung der taschenförmigen Aufnahmeöffnungen bedarf.

Das Laserschmelzverfahren kann aufgrund des Befestigungsgewindes in einem zweiten Schritt eine spanabhebende oder Umformarbeit benötigen.

Bei Haupt-Zerspanungswerkzeugen ist es bekannt, die vorzugsweise aus Hartmetall bestehenden Schneideinsätze auswechselbar zu machen. In einem solchen Fall reicht es aus, den Schaft aus einem gewöhnlichen Werkzeugstahl zu fertigen, bei dem die Anbringung der einen oder mehreren taschenförmigen Aufnahmeöffnungen besonders einfach ist.

Wenn mehr als eine Aufnahmeöffnung im Schaftbereich des Haupt-Zerspanungswerkzeuges angebracht werden sollen, dann können die Aufnahmeöffnungen auf einer einzigen Umfangslinie am Umfang des Schafts gleichmässig verteilt angeordnet sein.

In einer anderen Ausgestaltung können die am Umfang verteilt angeordneten Aufnahmeöffnungen auch in axialer Richtung des Schafts zueinander versetzt angeordnet sein. Sie sind dann auf verschiedenen, einen axialen Abstand zueinander aufweisenden Umfangslinien im Schaft angeordnet.

Der Begriff "in radialer Richtung weisende Aufnahmeöffnung" meint in einer ersten bevorzugten Ausführung, dass eine Normale auf den Bodenbereich der taschenförmigen Aufnahmeöffnung in genau radialer Richtung in Bezug zur Schaftlängsachse gerichtet ist. Sie steht demnach senkrecht zur Schaftlängsachse und ist genau in radialer Richtung gerichtet.

Darauf ist die Erfindung jedoch nicht beschränkt. Es kann in einer anderen bevorzugten Ausführung vorgesehen sein, dass die Normale auf den Bodenbereich der werkzeugseitigen Aufnahmeöffnung einen Winkel zur Radialen der Schaftlängsachse bildet. Dies bedeutet, dass die in die eine oder mehreren Aufnahmeöffnungen eingesetzten taschenförmigen Aufnahmegehäuse mit den eingesetzten Zerspanungswerkzeugen schräg radial nach außen gerichtet sind.

Mit der gegebenen technischen Lehre ergibt sich der Vorteil, dass der Schaftbereich eines drehend angetriebenen Haupt-Zerspanungswerkzeugs nur in der Weise verändert zu werden braucht, dass dort mindestens an einer Seite, bevorzugt jedoch an gegenüberliegenden Seiten, jeweils eine taschenförmige Aufnahmeöffnung geschaffen wird, in welche ein Aufnahmegehäuse für die Halterung eines Neben-Zerspanungswerkzeugs lösbar einsetzbar und verankerbar ist.

Das Aufnahmegehäuse für das Neben-Zerspanungswerkzeug ist bevorzugt kassettenförmig ausgebildet, was bedeutet, dass es ein Halterungsgehäuse oder ein Halter ist, in dem ein oder mehrere Neben-Zerspanungswerkzeuge aufgenommen sind. Diese können dort auch auswechselbar angeordnet sein. Das Aufnahmegehäuse wird dabei auswechselbar in die schaftseitige taschenförmige Aufnahmeöffnung des Haupt-Zerspanungswerkzeug eingesetzt und form- und kraftschlüssig in der schaftseitigen Aufnahmeöffnung verankert.

Neben der Anordnung eines einzigen kassettenartigen Aufnahmegehäuses im Schaft des Haupt-Zerspanungswerkzeugs können auch mehrere, gleichmäßig am Umfang verteilte Aufnahmeöffnungen für die Halterung von mehreren Aufnahmegehäusen mit darin integrierten Schneidwerkzeugen angeordnet sein.

Wenn in der folgenden Beschreibung der Begriff "Aufnahmegehäuse" verwendet wird, so ist dies allgemein zu verstehen. Es kann auch der Begriff "Kassette" oder "Halterungsgehäuse" oder "Halter" für ein solches Aufnahmegehäuse mit darin befestigten Schneidwerkzeugen verwendet werden.

Unter dem Begriff "Schneidwerkzeug", welches in dem Aufnahmegehäuse angeordnet werden kann, werden verschiedene Arten von Neben-Zerspanungswerkzeugen verstanden, nämlich insbesondere ein Entgratwerkzeug, wie es den oben genannten beiden Druckschriften des gleichen Anmelders zu entnehmen ist, jedoch auch ein Senkwerkzeug oder ein Honwerkzeug oder ein Ausdrehwerkzeug oder ein Nutstoßwerkzeug.

Alle genannten Neben-Zerspanungswerkzeuge zeichnen sich dadurch aus, dass sie bei einer rotativen Drehung des Werkzeughalters des Haupt-Zerspanungswerkzeugs in dessen Umfangsrichtung spanabhebend, z.B. an einem Bohrungsrand, arbeiten, wobei bevorzugt die Bohrung vom Haupt-Zerspanungswerkzeug gefertigt wurde.

Demnach kommt es auf die Art und Form des Neben-Zerspanungswerkzeugs nicht an. Dieses Werkzeug kann eine oder mehrere Schneidkanten aufweisen, es können auch mehrere Werkzeugklingen oder Schneidmesser vorhanden sein.

Der besondere Vorteil der technischen Lehre der Erfindung liegt demnach darin, dass im Schaft eines Haupt-Zerspanungswerkzeugs lediglich ein oder mehrere taschenförmige Aufnahmeöffnungen für die form- und kraftschlüssige, auswechselbare Aufnahme von in Kassetten gefassten Neben-Zerspanungswerkzeugen geschaffen sind. Damit sind die Neben-Zerspanungswerkzeuge leicht auswechselbar und können der Anwendung des Haupt-Zerspanungswerkzeug von Fall zu Fall angepasst werden und sind bei Verschleiss leicht auswechselbar.

Das drehend angetriebene Haupt-Zerspanungswerkzeug kann unterschiedliche Aufgaben erfüllen, zum Beispiel kann es an seiner Vorderseite eine spanabhebende Bohrerspitze tragen, die ggf. auch auswechselbar ist.

Ebenso kann es vorgesehen sein, dass statt der Bohrerspitze ein Fräswerkzeug, ein Senkwerkzeug oder ein Honwerkzeug angeordnet ist. Wobei die Erfindung nicht darauf beschränkt ist, dass dieses Hauptwerkzeug, welches drehend angetrieben ist, ein spanabhebendes Werkzeug ist.

Es kann in einer anderen Ausführung die spanabhebende Eigenschaft des Hauptwerkzeugs entfallen. Aus diesem Grund wird das Hauptwerkzeug auch als «Werkzeughalterung» bezeichnet, sodass bei dieser Ausführung nur noch ein zylinderförmiger Schaft vorhanden ist, in dem die erfindungsgemäßen ein oder mehreren taschenförmigen Aufnahmeöffnungen als Halterung für das eine oder die mehreren Schneidwerkzeuge tragende Aufnahmegehäuse angeordnet sind.

Neben dem drehenden Antrieb des Hauptwerkzeugs, gibt es natürlich auch die Möglichkeit, dass statt des Drehantriebs ein in axialer Längsrichtung gerichteter Stoßantrieb verwendet. Der Werkzeughalter mit den schaftseitigen Neben-Zerspanungswerkzeugen wird dann nur in Längsrichtung gestoßen und gezogen. Der Drehantrieb erfolgt dann in Umfangsrichtung nur noch in Indexschritten, wie es aus einem älteren Patent des gleichen Anmelders zu entnehmen ist. Während dieses in Indexierschritten erfolgenden Drehantriebs ist keine Schneidaktion der Zerspanungswerkzeugen vorhanden. Demzufolge führen dann die in radialer Richtung im Neben-Zerspanungswerkzeug gerichteten Schneidwerkzeuge eine stoss- und zugartige spanabhebende Bewegung parallel zur Längsachse des Hauptwerkzeugs aus und bearbeiten einen Bohrungsrand oder eine Nut in einem Gegenstand nicht drehend, sondern stossartig in Stoss- und Ziehrichtung.

Eine bevorzugte Ausführung ist demnach auf die auswechselbare Halterung eines kassettenförmigen Aufnahmegehäuses im zylinderförmigen Arbeitsbereich eines allgemeinen, drehend und/oder in Längsrichtung oszillierend angetriebenen Hauptwerkzeuges gerichtet.

In einer ersten bevorzugten Ausführungsform ist es vorgesehen, dass das kassettenförmige Aufnahmegehäuse als Werkzeughalter oder als Haltungsgehäuse für ein oder mehrere Schneid- oder Entgratmesser ausgebildet ist, wobei in einer ersten bevorzugten Ausführungsform die Befestigung dieses Aufnahmegehäuses in der in der Formgebung angepassten Aufnahmeöffnung mittels einer V-förmigen Schraubenbefestigung erfolgt.

Unter dem Begriff «V-förmige Schraubbefestigung» wird verstanden, dass mindestens an einer Seite des kassettenförmigen Aufnahmegehäuses eine schräge, nach außen geöffnete Befestigungsausnehmung angeordnet ist, und dass die Bohrung für die Aufnahme des Befestigungselementes im zylinderförmigen Schaftbereich des Hauptwerkzeuges angeordnet ist. Daher ist dieses erste Befestigungsart dadurch gekennzeichnet, dass die im Arbeitsbereich des drehend angetriebenen Werkzeuges angeordnete Befestigungsbohrung mindestens eine Seitenfläche des Aufnahmegehäuses schneidet und in dieser Seitenfläche eine zugeordnete Befestigungsausnehmung angeordnet ist, in die das bolzenförmige Ende des Befestigungselementes eingreift und das Aufnahmegehäuse gegen die taschenförmigen Flächen der Aufnahmeöffnung spannt.

In einer ersten Ausführungsform ist vorgesehen, dass das Befestigungselement eine Madenschraube ist und dass deshalb der Schraubenbolzen der Madenschraube in eine zugeordnete, angepasste Befestigungsausnehmung eingreift, die an der Seitenfläche des Aufnahmegehäuses angeordnet ist, wobei es bevorzugt wird, dass zwei einander gegenüberliegende Befestigungsausnehmungen in jeweils einander gegenüberliegenden Seitenflächen des Aufnahmegehäuses angeordnet sind, um eine linksseitige oder rechtsseitige Befestigung von derartigen Aufnahmegehäusen mit darin angeordneten Schneidwerkzeugen zu ermöglichen.

In einer anderen Ausgestaltung kann es auch vorgesehen sein, dass auch mehr als eine Befestigungsbohrung vorhanden ist, wobei die Befestigungsbohrungen zum Beispiel auch im gegenseitigen Abstand in axialer Längsrichtung des kassettenförmigen Aufnahmegehäuses verteilt angeordnet sein können, insbesondere dann, wenn es um die Halterung größerer Aufnahmegehäuse geht.

In einer dritten Ausführungsform kann es vorgesehen sein, dass statt der Anordnung der Befestigungsbohrung an jeweils mindestens einer Seitenfläche des Aufnahmegehäuses auch stattdessen eine stirnseitige Befestigung des Aufnahmegehäuses vorgesehen sein kann, wobei es verschiedene Möglichkeiten für diese stirnseitige Befestigung gibt.

In einer ersten Ausführungsform kann es vorgesehen sein, dass lediglich an einer Stirnseite eine solche Befestigungsbohrung angeordnet ist und dass an der gegenüberliegenden Stirnseite des Aufnahmegehäuses ein zugeordneter Vorsprung oder ein vorstehender Grat oder ein anderes Arretiermittel angeordnet ist, der in eine zugeordnete Nut an der Stirnseite der taschenförmigen Aufnahmeöffnung im Arbeitsbereich des drehend angetriebenen Werkzeuges eingreift. Damit würde eine einzige stirnseitige Befestigungsschraube ausreichen, um das erfindungsgemäße Aufnahmegehäuse ausreichend in der taschenförmigen Aufnahmeöffnung im drehend angetriebenen Hauptwerkzeug festzulegen.

In einer anderen Ausgestaltung kann es vorgesehen sein, dass eine federbelastete Rastverbindung zwischen dem kassettenförmigen Aufnahmegehäuse und der taschenförmigen Aufnahmeöffnung vorhanden ist. Dabei gibt es verschiedene Ausführungen. Allen Ausführungen ist gemeinsam, dass die einseitig oder beidseitig angeordnete formschlüssige Einhängeverbindung als federbelastete Rastverbindung ausgebildet ist. Ein solche Rastverbindung kann aus einem federbelasteten Vorsprung oder Stift bestehen, der in eine zugeordnete Nut am gegenüberliegenden Teil eingreift. Wenn nur an der einen Seite, z. B. der einen Stirnseite des Aufnahmegehäuses, eine solche federbelastete Rastverbindung angeordnet ist, kann die gegenüberliegende Seite mit einer Schraubbefestigung gesichert sein.

Es ist jedoch auch möglich, an beiden Seiten des Aufnahmegehäuses federnde Rastmitteln anzuordnen und auf eine Schraubbefestigung zu verzichten oder die Schraubbefestigung nur noch als zusätzliche Lagensicherung zu verwenden.

Mit einer anderen Ausgestaltung der Erfindung kann es vorgesehen sein, dass anstatt des einseitig angeordneten Vorsprungs nunmehr zwei stirnseitig im gegenseitigen Abstand und gegenüberliegende Schraubenelemente angeordnet sein können, die mit ihren Köpfen so ausgebildet sind, dass sie mit zugeordneten Schrägen des Aufnahmegehäuses zusammenarbeiten und somit das Aufnahmegehäuse in der werkzeugseitigen Aufnahmeöffnung niederhalten und formschlüssig festlegen.

In einem bevorzugten Ausführungsbeispiel wurde vorstehend beschrieben, dass das Befestigungselement als zylindrische Madenschraube ausgebildet ist. Eine solche Madenschraube hat keinen im Durchmesser vergrößerten Befestigungskopf und hat deshalb den Vorteil, dass sie versenkt in der werkzeugseitigen Befestigungsbohrung angeordnet werden kann.

In einer anderen Ausgestaltung kann es vorgesehen sein, dass das Befestigungselement entweder als Kegelschraube ausgebildet ist, die ein einen im Durchmesser vergrößerten kegeligen Kopf aufweist oder auch als Querspannstift, der nicht in eine Bohrung eingeschraubt wird, sondern der in die Aufnahmebohrung eingeschlagen wird, und der aufgrund seiner Spreizwirkung ebenfalls eine Niederhaltewirkung auf das Aufnahmegehäuse in der werkzeugseitigen Aufnahmeöffnung gewährleistet.

In einer anderen Ausgestaltung kann es vorgesehen sein, dass statt der zylinderförmigen Madenschraube andere Befestigungselemente verwendet werden, insbesondere eine Senkkopfschraube, deren kegeliger Kopf dazu dient, das Aufnahmegehäuse in der werkzeugseitigen Aufnahmeöffnung niederzuhalten und formschlüssig zu befestigen.

In einer dritten Ausgestaltung kann es vorgesehen sein, dass das Befestigungselement als Zylinderkopfschraube mit einem im Durchmesser vergrößerten Zylinderkopf ausgebildet ist, der über Schrägbohrungen im Arbeitsbereich des drehend angetriebenen Werkzeuges versenkt angeordnet ist.

Es ist deshalb nicht lösungsnotwendig, dass die Bohrungsachsen für die Befestigungselemente senkrecht zur Drehrichtung und Längsachse des drehend angetriebenen Hauptwerkzeuges liegen; es kann in einer anderen Ausgestaltung auch vorgesehen sein, dass diese Bohrungsachsen schräg herausgebildet sind, das heißt, einen Winkel zur Längsachse bilden.

Durch Verwendung eines in mehrfachen Ausführungsformen beschriebenen Befestigungselements in einer einseitig offenen Befestigungsausnehmung an der Seitenfläche oder der Stirnfläche des taschenförmigen Aufnahmegehäuses wird der weitere Vorteil erreicht, dass nicht nur eine formschlüssige Verbindung zwischen den Wänden des Aufnahmegehäuses und den zugeordneten Wänden der Aufnahmeöffnung im Arbeitsbereich des drehend angetriebenen Werkzeuges erreicht wird, sondern darüber hinaus auch noch eine kraftschlüssigen Einspannung erfolgt, weil aufgrund der Kräfteeinwirkung vom Befestigungselement eine niederhaltende Spannwirkung auf das kassettenförmige Aufnahmegehäuse erfolgt, sodass dieses nicht nur formschlüssig in der Aufnahmeöffnung des Hauptwerkzeuges aufgenommen ist, sondern auch kraftschlüssig mit einer durch das Befestigungselement erreichten Spannkraft, die auch nachstellbar und kontrollierbar ist. Damit können die hohen Zentrifugalkräfte, die auf das Neben-Zerspanungswerkzeug wirken, gut beherrscht werden.

Allen Ausführungsformen ist gemeinsam, dass jederzeit eine Auswechslung des Aufnahmegehäuses mit dem darin angeordneten einen oder mehreren Schneidwerkzeigen möglich ist, was dem Stand der Technik überlegen ist, weil damit nicht das Hauptwerkzeug ausgetauscht werden muss, wenn nur das Schneidwerkzeug im Neben-Zerspanungswerkzeug verschlissen ist.

Nachdem auf das kassettenförmige Aufnahmegehäuse des Neben-Zerspanungswerkzeugs hohe Fliehkräfte beim Drehantrieb des Haupt-Zerspanungswerkzeugs wirken, können in einer anderen Ausgestaltung in der schaftseitigen taschenförmigen Aufnahmeöffnung Hinterschneidungen angeordnet sein, in welche das kassettenförmige Aufnahmegehäuse mit zugeordneten Vorsprüngen eingreift und damit gegen die Einwirkungen von Fliehkräften verschiebungsgesichert festgelegt ist.

In kinematischer Umkehrung dieser Ausführung kann es vorgesehen sein, dass im Wandbereich der schaftseitigen Aufnahmeöffnung geeignete Vorsprünge angeordnet sind, welche mit zugeordneten Nuten im kassettenförmigen Aufnahmegehäuse zusammenwirken. In beiden Fällen werden die Fliehkräfte nicht von den Befestigungselementen aufgenommen, sondern von den formschlüssig ineinandergreifenden Verbindungen zwischen dem kassettenartigen Aufnahmegehäuse und der schaftseitigen taschenförmigen Aufnahmeöffnung. Die Befestigungselemente dienen dann nur noch der Lagensicherung.

Demnach können die formschlüssige Verbindung zwischen dem kassettenartigen Aufnahmegehäuse und der taschenförmigen Aufnahmeöffnung als Rast- oder Klemm- oder Keil- oder Schraubverbindung ausgebildet sein. Es ist auch jede beliebige Kombination der vorher genannten Verbindungs- oder Arretiermittel möglich.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, könnten als erfindungswesentlich beansprucht werden, soweit sie einzeln oder in Kombination gegenüber dem Stand der Technik neu sind. Die Verwendung der Begriffe "wesentlich" oder "erfindungsgemäß" oder "erfindungswesentlich" ist subjektiv und impliziert nicht, dass die so benannten Merkmale zwangsläufig Bestandteil eines oder mehrerer Patentansprüche sein müssen.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Perspektivische Vorderansicht eines Werkzeughalters mit einer beispielshaft angebrachten Bohrerspitze.
Figur 2: Die Seitenansicht der Anordnung nach Figur 1.
Figur 3: Die um 90° gedrehte Seitenansicht der Figur 1.
Figur 4: Schnitt gemäß der Linie C-C in Figur 3.
Figur 5: Die Seitenansicht des Aufnahmegehäuses.
Figur 6: Die um 90° gedrehte Ansicht nach Figur 5.
Figur 7: Die perspektivische Ansicht des Aufnahmegehäuses gemäß den
Figuren 5 und 6.

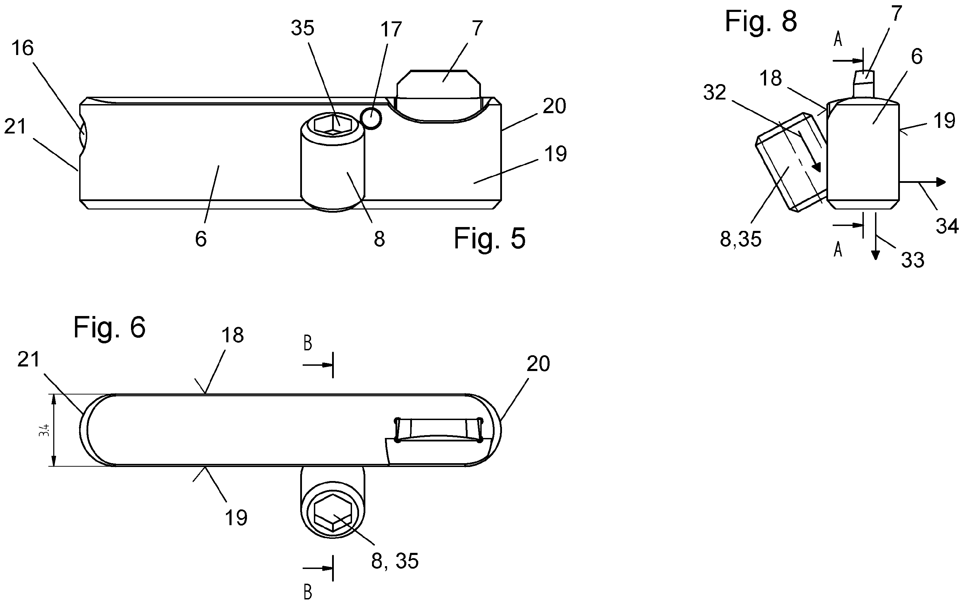

Figur 8: Stirnansicht auf das Aufnahmegehäuse.

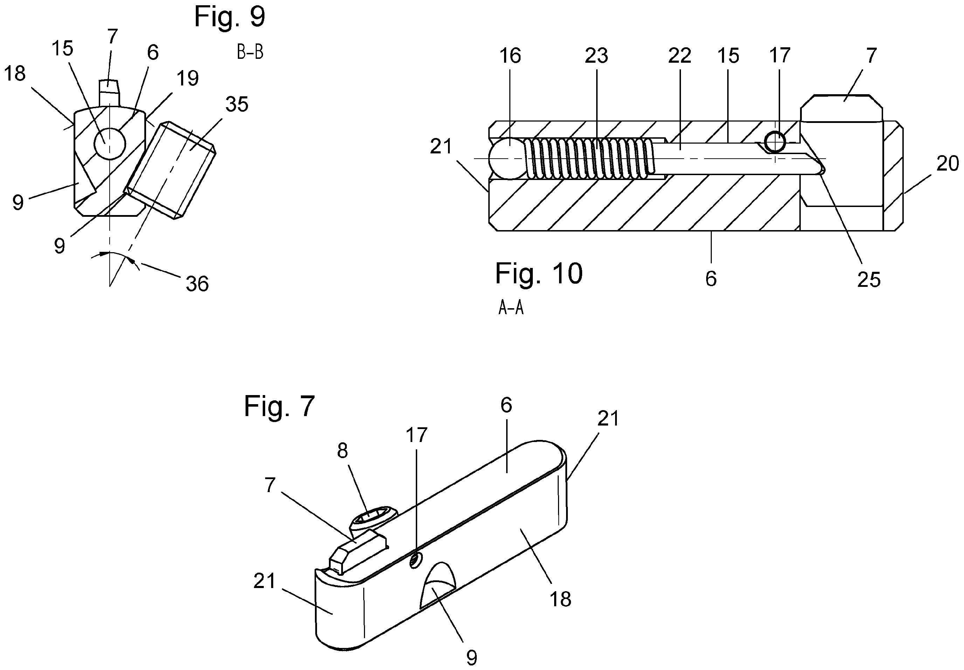

Figur 9: Schnitt gemäß der Linie B-B in Figur 6.
Figur 10: Schnitt gemäß der Linie A-A in Figur 8.

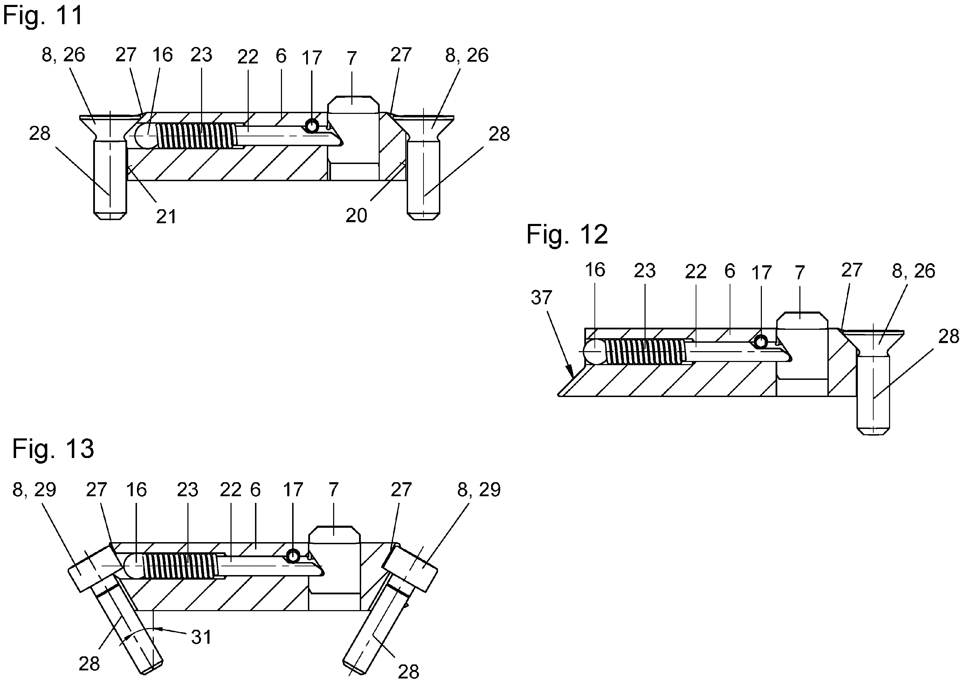

Figur 11: Eine weitere Ausführungsform für die Festlegung eines Aufnahmegehäuses in der Aufnahmeöffnung eines drehend angetriebenen Werkzeuges.
Figur 12: Eine gegenüber Figur 11 abgewandelte Ausführungsform mit lediglich einer einseitigen Schraubbefestigung.
Figur 13: Eine gegenüber den Figuren 11 und 12 abgewandelte Ausführungsform mit einem über Schrägbohrungen festgelegten Aufnahmegehäuse.

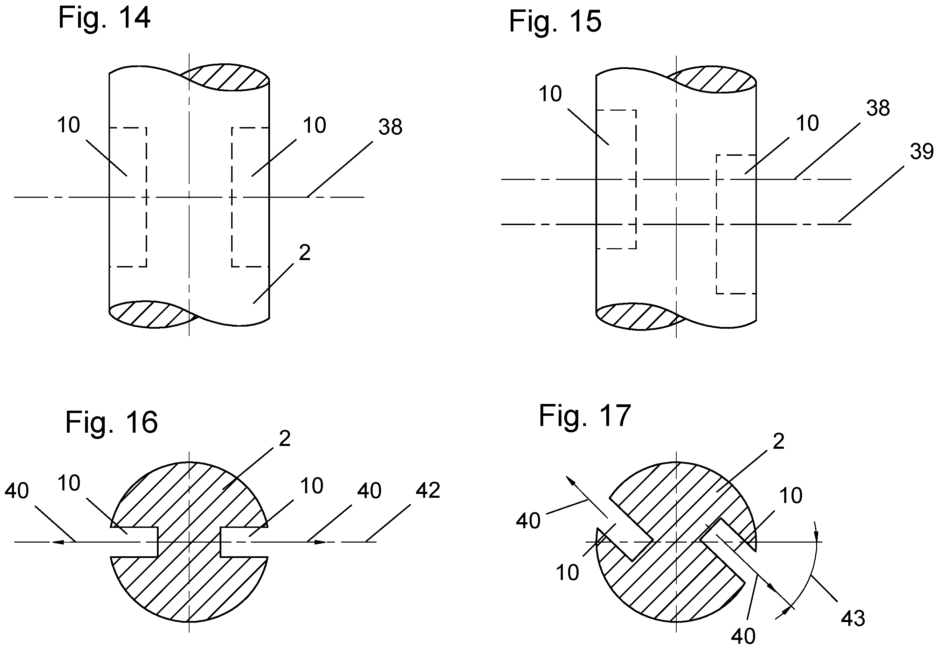

Figur 14: schematisiert die schaftseitige Anordnung der Aufnahmegehäuse auf einer Umfangslinie
Figur 15: schematisiert eine Abwandlung nach Figur 14
Figur 16: schematisiert ein Schnitt durch einen Schaft mit Darstellung der Wirkungsrichtung der Neben-Schneidwerkzeuge in einer ersten Ausführung
Figur 17: eine Abwandlung der Figur 16

In Figur 1 ist allgemein ein Werkzeughalter 1 dargestellt, der als beispielhafte Ausführungsform lediglich in seinem Arbeitsbereich 3 ein schneidend ausgebildetes Werkzeug trägt, nämlich eine auswechselbarer Bohrerspitze 5. Der Werkzeughalter 1 wurde im allgemeinen Beschreibungsteil synonym auch als Haupt-Zerspanungswerkzeug bezeichnet.

Die Erfindung ist jedoch nicht auf die zerspanenden Eigenschaften eines Haupt-Zerspanungswerkzeugs angewiesen und aus diesem Grund wurde im nachfolgenden Zeichnungsbeschreibungsteil der allgemeinere Begriff «Werkzeughalter» gewählt. Wenn in den Patentansprüchen im Hinblick auf den Schaft des Hauptzerspanungswerkzeugs das Bezugszeichen 2 für den Schaft und gleichzeitig das Bezugszeichen 3 für den Arbeitsbereich des Zerspanungswerkzeugs verwendet wurde, bedeutet dies, dass der Ort der Anbringung des schaftseitigen Aufnahmegehäuses 6 sowohl im oberen Schaft 2 (unterhalb von dessen Einspannbereich) als auch im oder am Arbeitsbereich 3 sein kann.

Der Werkzeughalter 1 besteht allgemein aus einem zylinderförmigen oder polygonalen Schaft 2, der um seine Längsachse 41 in Drehrichtung 11 in beliebiger Weise drehend angetrieben ist.

In der allgemeinen Beschreibung wurde auch angegeben, dass das Schneidwerkzeug, nämlich die hier genannte Bohrerspitze 5, auch vollständig entfallen kann, weil das zerspanende Werkzeug 4, welches im Arbeitsbereich 3 angeordnet ist, auch vollständig entfallen kann. Es kann also sein, dass in einer erweiterten Ausführungsform das spanabhebende Werkzeug 4 im Arbeitsbereich des drehend angetriebenen Werkzeughalters 1 vollständig entfällt und dass nur eine Halterung für das erfindungsgemäße Aufnahmegehäuse 6 bei einem neutralen Werkzeughalter 1 vorgesehen ist, in dem die erfindungsgemäßen Schneidwerkzeuge des Neben-Zerspanungswerkzeugs, bevorzugt die dort gezeigten Entgratmesser 7, angeordnet sind.

Im gezeigten Ausführungsbeispiel nach den Figuren 1 bis 4 sind demnach bezüglich der Mittenlängsachse 41 des Werkzeughalters 1 im Arbeitsbereich 3, nämlich im Bereich der Bohrerwendel, an diametral gegenüberliegenden Seiten des Werkzeughalters 1 längliche, - bevorzugt einseitig offene, taschenförmig ausgebildete - Aufnahmeöffnungen 10 im Schaft versenkt angeordnet, die für eine kraft- und formschlüssige Aufnahme des erfindungsgemäßen - bevorzugt kassettenförmig ausgebildeten - Aufnahmegehäuses 6 dienen.

Neben der länglichen Form der Aufnahmeöffnungen 10 gibt es selbstverständlich auch andere Formgebungen, zum Beispiel rundzylindrische, polygonale oder andere Formen von - bevorzugt taschenförmigen - Aufnahmeöffnungen 10, die selbstverständlich an die Formgebung des dort klemmend und formschlüssig aufzunehmenden - bevorzugt kassettenförmige - Aufnahmegehäuses 6 angepasst sind.

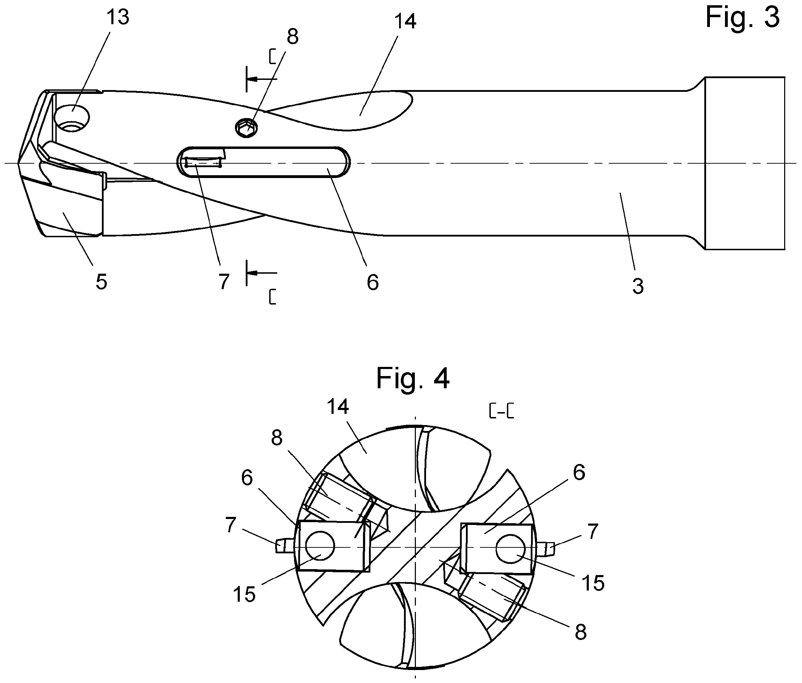

Im gezeigten Ausführungsbeispiel sind zwei diametral gegenüberliegende Aufnahmeöffnungen 10 für die Aufnahme von zwei diametral gegenüberliegenden Aufnahmegehäusen 6 vorgesehen, wie sich aus Figur 4 ergibt.

Darauf ist die Erfindung nicht beschränkt. In einer anderen Ausführungsform kann es vorgesehen sein, dass lediglich eine einzige in radialer Richtung nach außen geöffnete Aufnahmeöffnung 10 am Umfang im Arbeitsbereich 3 des Werkzeughalters 1 angeordnet ist und in anderen Ausführungsformen kann es vorgesehen sein, dass mehrere Aufnahmeöffnungen 10 gleichmäßig am Umfang verteilt im Arbeitsbereich 3 des Werkzeughalters 1 und/oder im Bereich des Schaftes 2 unterhalb seines Einspannbereiches angeordnet sind.

Im gezeigten Ausführungsbeispiel besteht das Werkzeug 4 aus einer auswechselbar gehaltenen Bohrerspitze 5, wobei die Bohrerspitze 5 mit Hilfe eines Klemmschlitzes 12 und einer zugeordneten Befestigungsschraube 13 festgelegt ist.

Mit der auswechselbaren Halterung einer solchen Bohrerspitze 5 ergibt sich er der weitere Vorteil, dass die Bohrerspitze bei Verschleiß ausgewechselt werden kann oder auch durch andere spanabhebende Werkzeuge ersetzt werden kann, wie zum Beispiel Fräsköpfe, Reibahlen und dergleichen spanabhebende Werkzeuge.

Im gezeigten Ausführungsbeispiel weist die Bohrerspitze 5 noch Spanleitstufen 14 auf und dabei wird es bevorzugt, wenn die erfindungsgemäßen schaftseitigen Aufnahmeöffnungen 10 außerhalb der Spanleitstufen 14 angeordnet sind und in den zylindrischen Arbeitsbereich 3 im Schaft 2 des Werkzeughalters 1 vertieft eingearbeitet sind, damit der insgesamt zur Verfügung stehende Querschnitt im Arbeitsbereich 3 nicht geschwächt wird.

Vom Größenverhältnis her kann noch ausgeführt werden, dass zum Beispiel bei einem Bohrerdurchmesser des Haupt-Zerspanungswerkzeugs von weniger als 12,6 mm eine einseitig offene - bevorzugt taschenförmige - Aufnahmeöffnung 10 und damit auch das formschlüssig dort eingepasste - bevorzugt kassettenförmige - Aufnahmegehäuse 6 in Längsrichtung ein Maß von etwa 30 mm und eine Breite von 3,5 mm bei einer Tiefe von 5,5 mm aufweist.

Bei Bohrerdurchmessern von mehr als 25 mm bis zu Durchmessern von 35 mm können die bevorzugten Abmessungen der schaftseitigen Aufnahmeöffnung 10 und damit annähernd kleiner auch die des Aufnahmegehäuses 6 L=40 mm, B=5,5 mm und T=8,5 mm betragen.

Bei Bohrerdurchmessern von mehr als 35 mm können die bevorzugten Abmessungen der schaftseitigen Aufnahmeöffnung 10 und damit annähernd kleiner auch die des Aufnahmegehäuses 6 L=45 mm, B=6,5 mm und T=10,0 mm betragen.

Aus den oben angegebenen bevorzugten Maßangaben ergibt sich, dass durch die schaftseitige Einbringung der Aufnahmeöffnungen 10 für die Aufnahme der nur unwesentlich kleineren Aufnahmegehäuse 6 der tragende Querschnitt des spanabhebenden Werkzeugs im Arbeitsbereich 3, insbesondere des Bohrers nur geringfügig verändert wird, sodass gleichwohl hohe Zerspanungskräfte auf das Haupt-Zerspanungswerkzeug übertragen werden können.

Daraus ergibt sich auch, dass der Querschnitt der taschenförmigen Aufnahmeöffnungen 10 und das dafür abgetragene schaftseitige Volumen, welches im Arbeitsbereich 3 ausgespart werden muss, sehr klein ist gegenüber den vorher im Stand der Technik genannten separaten Befestigungen von Schneidwerkzeuge bei einem drehend angetriebenen Werkzeughalter.

Im gezeigten Ausführungsbeispiel wird eine einseitige klemmende und formschlüssige Befestigung des Aufnahmegehäuses 6 in der werkzeugseitigen Aufnahmeöffnung 10 geschildert, wobei das Befestigungselement 8 in einer ersten Ausführung bevorzugt als Madenschraube 35 ausgebildet ist.

Wenn der Begriff "Befestigungselement 8" verwendet wird, so sind damit verschiedene Befestigungselemente gemeint, wie zum Beispiel die im Ausführungsbeispiel der Figuren 1 bis 10 dargestellte Madenschraube 35, worauf die Erfindung jedoch nicht beschränkt ist.

Das bolzenseitige Ende der Madenschraube 35 greift in eine seitliche, in einer oder beiden Seitenflächen 18, 19 ausgebildeten einseitig offenen Befestigungsausnehmung 9 im Aufnahmegehäuse 6 ein.

Jede Befestigungsausnehmungen 9 ist seitlich nach unten und außen geöffnet, wodurch sich eine Einspannung des Aufnahmegehäuses 6 gemäß den Figuren 8 und 9 im der schaftseitigen Aufnahmeöffnung 10 ergibt. Wenn demnach die Madenschraube 35 gemäß Figur 8 in Kraftrichtung 32 eingeschraubt wird, wodurch sich ein Winkel 36 zur Vertikalen bildet, kommt es zu einer kraftschlüssigen Verspannung des Aufnahmegehäuses 6 in der in der Formgebung angepassten schaftseitigen Aufnahmeöffnung 10, wie es in Figur 8 näher dargestellt ist.

Dort ist erkennbar, dass die Madenschraube 35 eine Kraftrichtung 32 nach unten auf das Aufnahmegehäuse 6 ausübt, welches somit in Spannrichtung 33 auf die Bodenfläche der schaftseitigen Aufnahmeöffnung 10 gepresst wird und dort formschlüssig festgelegt wird. Aufgrund des verwendeten Winkels 36 drückt diese Madenschraube 35 jedoch auch einseitig auf die Seitenfläche 18 des Aufnahmegehäuses 6 und drückt dieses mit seiner gegenüberliegenden Seitenfläche 19 in Pfeilrichtung 34 gegen die gegenüberliegende Seitenwand in der Aufnahmeöffnung 10, sodass damit eine form- und kraftschlüssige Festlegung des Aufnahmegehäuses 6 in der Aufnahmeöffnung 10 mit nur einer einzigen Madenschraube 35 erfolgen kann. Die Madenschraube 35 ist in einer schräg zur Längsachse 41 und zur radialen Richtung 42 gerichteten Befestigungsbohrung 30 im Schaft eingeschraubt.

Aus Figur 4 ist erkennbar, dass zwei mit Entgratmessern ausgerüstete Aufnahmegehäuse 6 diametral gegenüberliegend in der vorher beschriebenen Weise im Schaft 2 festgelegt sind, was ein besonderer Vorteil gegenüber dem Stand der Technik ist, weil die Figur 4 auch zeigt, dass nur wenig Volumen im schaftseitigen Arbeitsbereich 3 des Werkzeughalters 1 für die auswechselbare Befestigung der diametral gegenüberliegenden Aufnahmegehäuse 6 notwendig ist.

Bei den vorher genannten Abmessungen reicht es beispielsweise aus, die Tiefe der Aufnahmeöffnung 10 in Abhängigkeit vom Durchmesser des Schafts 2, 3 nur im Bereich zwischen 7 mm bis maximal 16,5 mm vorzusehen, was zeigt, dass nur ein geringes Volumen des Werkzeughalters 1 bei der vertieften Anbringung der - bevorzugt taschenförmigen - Aufnahmeöffnungen 10 verbraucht wird und damit insbesondere der Arbeitsbereich 3 nur wenig geschwächt wird, sodass er hohen Zerspanungskräften und hohen Drehmomenten ausgesetzt werden kann.

Als Beispiel für ein Entgratwerkzeug kann die Ausführungsform der Figur 5 bis 10 angegeben werden, worauf die Erfindung jedoch nicht beschränkt ist. Wie vorher im allgemeinen Teil angegeben, können statt eines Entgratwerkzeugs mit den dort angegebenen Entgratmessern 7 auch andere spanabhebende Werkzeuge im Aufnahmegehäuse 6 angeordnet werden, wie zum Beispiel nicht näher dargestellte Senkwerkzeuge, Ausdrehwerkzeuge, Nutstoßwerkzeuge oder Honwerkzeuge.

Die hier dargestellten Entgratmesser 7 sind deshalb nur beispielhaft zu verstehen, weil sie aus älteren Patenten des gleichen Anmelders zu entnehmen sind. Das Entgratmesser 7 ist in einer Querbohrung im Aufnahmegehäuse 6 nach Figur 7 und 10 in radialer Richtung federbelastet verschiebbar gehalten und weist eine seitliche Steuernut 25 auf, in welche die Bolzenspitze eines Steuerbolzens 22 eingreift, der durch eine Druckfeder 23 vorgespannt in die Steuernut 25 hinein drückt, wobei die Druckfeder 23 nach hinten durch eine Verschlusskugel 24 in der Längsbohrung 15 gehalten wird. Die gesamte Verstellmechanik ist demnach in der Längsbohrung 15 im - bevorzugt kassettenförmigen - Aufnahmegehäuse 6 angeordnet und ein Haltestift 17 dient der Lagesicherung bei der Verschiebung des Steuerbolzens 22.

In einer anderen Ausgestaltung der vorliegenden Erfindung kann es jedoch auch vorgesehen sein, dass statt der einseitigen oder auch zweiseitigen Befestigung des Aufnahmegehäuses 6 durch zugeordnete Madenschrauben 35 auch eine stirnseitige Befestigung an den aneinander gegenüberliegenden Stirnflächen 20, 21 des Aufnahmegehäuses 6 vorgesehen ist.

Hier zeigt die Figur 11 eine erste Ausführungsform, bei der erkennbar ist, dass die stirnseitige Festlegung des Aufnahmegehäuses 6 mit zwei einander gegenüberliegenden und in parallelen Bohrungsachsen 28 eingeschraubten Senkkopfschrauben 26 erfolgt, wobei sich der jeweilige Kopf der Senkkopfschraube an einer zugeordneten Anschrägung 27 an der Oberseite des Aufnahmegehäuses 6 anlegt und dieses auf den Boden der Aufnahmeöffnung 10 herunterzieht und dort festliegt.

In einer anderen Ausgestaltung kann es auch vorgesehen sein, dass die Senkkopfschrauben 26 schräg eingeschraubt sind, was bedeutet, dass in Abwandlung der Figur 11 vorgesehen sein kann, dass die Bohrungsachsen 28 einen Winkel 31 zueinander bilden, wie es am anderen Ausführungsbeispiel der Figur 13 dargestellt ist.

In einer dritten Ausgestaltung kann auch eine einseitige Befestigung mit lediglich einer einzigen Senkkopfschraube 26 vorgesehen werden, wie es in Figur 12 dargestellt ist. Dort ist an der einen Stirnfläche 21 des Aufnahmegehäuses 6 ein Vorsprung 37 angeordnet, der in eine zugeordnete, nicht näher dargestellte Aussparung oder Hinterschneidung an der Stirnseite der Aufnahmeöffnung 10 eingreift. An der gegenüberliegenden Stirnfläche 20 ist entweder eine einzige Senkkopfschraube 26 mit einer vertikalen Bohrungsachse 28 angeordnet oder auch eine Senkkopfschraube mit einer schräg nach innen gerichtete Bohrungsachse 28, wie es in Figur 13 dargestellt ist.

Statt der stirnseitigen Festlegung des Aufnahmegehäuses 6 mit dort angeordneten Vorsprüngen 37, die unter nicht näher dargestellte Nuten oder Hinterschneidungen an der Stirnseite der Aufnahmeöffnung 10 eingreifen, kann eine solche Befestigungsart auch an den Längsseiten des Aufnahmegehäuses 6 im Bereich der Seitenflächen 18, 19 angeordnet sein.

In kinematischer Umkehrung können die Vorsprünge 37 an der Stirn- oder der Seitenfläche 20, 21; 18, 19 auch als Hinterschneidungen ausgebildet sein, die hinter zugeordneten Vorsprüngen im schaftseitigen Aufnahmegehäuse 6 eingreifen.

Neben der einseitigen oder zweiseitigen Befestigung mit Hilfe von Senkkopfschrauben 26 können auch Zylinderkopfschrauben 29 gemäß Figur 13 verwendet werden, wobei sich diese Zylinderkopfschrauben29 jeweils mit ihren Köpfen vergrößerten Durchmessers an einer zugeordneten Anschrägung 27 im Bereich der Stirnflächen 20, 21 oder Seitenflächen 18, 19 anlegen und somit ebenfalls das Aufnahmegehäuse 6 sowohl in Pfeilrichtung 33 nach unten gegen den Boden der Aufnahmeöffnung 10 pressen als auch eine zusätzliche seitliche Vorspannung in schräger Richtung auf die Seitenflächen der Aufnahmeöffnung 10 ausüben, sodass es zu einer kraft- und formflüssigen Verspannung der Aufnahmegehäuses 6 in der Aufnahmeöffnung 10 kommt.

Die Bohrungsachsen 28 der Zylinderkopfschrauben sind demnach jeweils im Bereich von Befestigungsbohrungen 30 im Arbeitsbereich 3 des drehend angetriebenen Werkzeughalters 1 angeordnet. Es kann sich dabei um Gewindebohrungen handeln, jedoch auch um rein zylindrische, glatte Bohrungen, wenn statt der hier beschriebenen Befestigungsschrauben 26, 29, 35 Zylinderspannstifte verwendet werden.

Die Figur 14 zeigt als Ausführungsbeispiel, dass die schaftseitigen Aufnahmeöffnungen 10 auf einer gemeinsamen Umfangslinie 38 angeordnet sind.

Die Figur 15 zeigt in Abwandlung, dass die schaftseitigen Aufnahmeöffnungen 10 einen gegenseitigen axialen Abstand aufweisen und mithin auf unterschiedlichen Umfangslinien 38, 39 im Schaft 2, 3 angeordnet sind

Figur 16 zeigt, dass die Arbeitsrichtung 40 der in den schaftseitigen Aufnahmeöffnungen 10 eingesetzten Aufnahmegehäuse 6 und der dort angeordneten Entgratmesser 7 in radialer Richtung 42 gerichtet ist. Die Entgratmesser werden also in Arbeitsrichtung 40 federbelastet radial nach außen gedrückt.

Die Figur 17 zeigt eine Abwandlung der Figur 16 aus der sich ergibt, dass die Arbeitsrichtung 40' auch im Winkel 43 schräg zur radialen Arbeitsrichtung 40 nach Figur 16 sein kann.

Kennzeichnend für die Erfindung ist demnach, dass ein auswechselbares Aufnahmegehäuse 6 mit verschiedenen Befestigungsvorrichtungen form- und kraftflüssig bevorzugt im schaftseitigen Arbeitsbereich 3 am Umfang eines drehend angetriebenen Werkzeughalters 1 eingepasst werden kann und in diesem Aufnahmegehäuse 6 eine beliebige Art von spanabhebenden Schneidwerkzeugen angeordnet sind.

### Bezugszeichenliste

- 1: Werkzeughalter
- 2: Schaft
- 3: Arbeitsbereich
- 4: Werkzeug
- 5: Bohrerspitze
- 6: Aufnahmegehäuse
- 7: Entgratmesser
- 8: Befestigungselement
- 9: Befestigungsausnehmungen
- 10: Aufnahmeöffnung
- 11: Drehrichtung
- 12: Klemmschlitz
- 13: Befestigungsschraube
- 14: Spanleitstufen
- 15: Längsbohrung
- 16: Verschlusskugel
- 17: Haltestift
- 18: Seitenfläche
- 19: Seitenfläche
- 20: Stirnfläche
- 21: Stirnfläche
- 22: Steuerbolzen
- 23: Druckfeder
- 24: Verschlusskugel
- 25: Steuernut
- 26: Senkkopfschraube
- 27: Anschrägung
- 28: Bohrungsachse
- 29: Zylinderkopfschraube
- 30: Befestigungsbohrung
- 31: Winkel
- 32: Kraftrichtung
- 33: Spannrichtung
- 34: Pfeilrichtung
- 35: Madenschraube
- 36: Winkel
- 37: Vorsprung
- 38: Umfangslinie
- 39: Umfangslinie
- 40: Arbeitsrichtung (von 7); 40'
- 41: Längsachse (von 2 und 4)
- 42: radiale Richtung
- 43: Winkel zu 42

## Patentansprüche

1. Zerspanungswerkzeug (4, 5), welches mit seinem Schaft (2, 3) um seine Längsachse (41) drehend oder stossend und ziehend angetrieben ist und am Schaft (2, 3) weitere schaftseitige Neben-Zerspanungswerkzeugen (6, 7, 8 befestigt sind, **dadurch gekennzeichnet, dass** die Neben-Zerspanungswerkzeuge (6, 7, 8) am Schaft (2, 3) und/oder im spanabhebenden Arbeitsbereich des Zerspanungswerkzeugs (4, 5) auswechselbar befestigt sind.

2. Zerspanungswerkzeug nach Anspruch 1, **dadurch gekennzeichnet, dass** ein oder mehrere Neben-Zerspanungswerkzeuge (6, 7, 8) am Umfang des Schafts (2, 3) des Zerspanungswerkzeugs (4, 5) angeordnet sind.

3. Zerspanungswerkzeug nach Anspruch 1 oder 2, **dadurch gekennzeichnet, dass** jedes Neben-Zerspanungswerkzeug (6, 7, 8) in einem kassettenartigen Aufnahmegehäuse (6) aufgenommen ist, das in einer taschenförmig vertieften Aufnahmeöffnung (10) im Schaft (2, 3) des Zerspanungswerkzeugs (4, 5) lösbar befestigt ist.

4. Zerspanungswerkzeug nach einem der Ansprüche 1 bis 3, **dadurch gekennzeichnet, dass** die mindestens eine schaftseitige, einseitig offene Aufnahmeöffnung (10) im Schaft (2, 3) des Zerspanungswerkzeugs (4, 5) in radialer Richtung (42) zur Längsachse (41) des Schaftes ausgerichtet ist.

5. Zerspanungswerkzeug nach einem der Ansprüche 1 bis 3, **dadurch gekennzeichnet, dass** die mindestens eine schaftseitige, einseitig offene Aufnahmeöffnung (10) im Schaft (2, 3) des Zerspanungswerkzeugs (4, 5) in einem Winkel (43) zur radialen Richtung (42) zur Längsachse (41) des Schaftes ausgerichtet ist.

6. Zerspanungswerkzeug nach einem der Ansprüche 1 bis 5, **dadurch gekennzeichnet, dass** die mindestens eine schaftseitige Aufnahmeöffnung (10) im Arbeitsbereich (3) oder unterhalb des Einspannbereiches im Schaft (2) des Zerspanungswerkzeugs (4, 5) angeordnet ist.

7. Zerspanungswerkzeug nach einem der Ansprüche 1 bis 7, **dadurch gekennzeichnet, dass** mehrere Neben-Zerspanungswerkzeuge (6, 7, 8) gleichmässig verteilt am Umfang des Schafts (2, 3) des Zerspanungswerkzeugs (4, 5) auf einer gleichen Umfangslinie (38) angeordnet sind.

8. Zerspanungswerkzeug nach einem der Ansprüche 1 bis 7, **dadurch gekennzeichnet, dass** mehrere Neben-Zerspanungswerkzeuge (6, 7, 8) gleichmässig verteilt am Umfang des Schafts (2, 3) des Zerspanungswerkzeugs (4, 5) auf axial zueinander versetzten Umfangslinien (38, 39) angeordnet sind.

9. Zerspanungswerkzeug nach einem der Ansprüche 1 bis 8, **dadurch gekennzeichnet, dass** das Zerspanungswerkzeug (4, 5) ein Bohrer oder ein Fräser oder ein Entgratwerkzeug oder ein Drehmeissel oder ein Räumwerkzeug ist.

10. Zerspanungswerkzeug nach einem der Ansprüche 1 bis 9, **dadurch gekennzeichnet, dass** das Neben-Zerspanungswerkzeuge (6, 7, 8) als Entgratwerkzeug oder als Senkwerkzeug oder als Honwerkzeug oder als Nutstosswerkzeug ausgebildet sind.

11. Zerspanungswerkzeug nach einem der Ansprüche 1 bis 10, **dadurch gekennzeichnet, dass** an dessen Werkzeugspitze spanabhebende Werkzeuge fehlen.

12. Zerspanungswerkzeug nach einem der Ansprüche 1 bis 11, **dadurch gekennzeichnet, dass** das mindestens eine kassettenförmige Aufnahmegehäuse (6) für die Halterung des mindestens einen Neben-Zerspanungswerkzeugs (6, 7, 8) formschlüssig in der mindestens einen zugeordneten, schaftseitigen Aufnahmeöffnung (10) des Zerspanungswerkzeugs (4, 5) auswechselbar befestigt ist.

13. Zerspanungswerkzeug nach einem der Ansprüche 1 bis 12, **dadurch gekennzeichnet, dass** die Befestigung der Aufnahmegehäuse (6) in den schaftseitigen Aufnahmeöffnungen (10) als Schraubbefestigung (8, 26, 29, 35) ausgebildet ist.

14. Zerspanungswerkzeug nach einem der Ansprüche 1 bis 13, **dadurch gekennzeichnet, dass** zwei einander gegenüberliegende Befestigungsausnehmungen (30) im Schaft (2, 3) des Zerspanungswerkzeugs (4, 5) an jeweils einander gegenüberliegenden Seitenflächen des Aufnahmegehäuses (6) angeordnet sind, um eine linksseitige oder rechtsseitige Befestigung von Aufnahmegehäusen (6) in der schaftseitigen Aufnahmeöffnung (10) zu ermöglichen.

15. Zerspanungswerkzeug nach Anspruch 13 oder 14, **dadurch gekennzeichnet, dass** die Schraubbefestigung durch mindestens eine Madenschraube (35) gebildet ist, die in einer schräg zur radialen Richtung (42) gerichteten Gewindebohrung (30) im Schaft (2, 3) eingeschraubt ist und mit ihrem bolzenseitigen Ende in eine schräg nach außen gerichtete, einseitig offene Befestigungsausnehmung (9) an der Seitenwand (18, 19) des Aufnahmegehäuses (6) eingreift.

16. Zerspanungswerkzeug nach Anspruch 13 oder 14, **dadurch gekennzeichnet, dass** die Schraubbefestigung durch zwei, sich jeweils an der Stirnfläche (20, 21) des Aufnahmegehäuses (6) anlegende Gewindeschrauben (26, 29) gebildet ist.

17. Zerspanungswerkzeug nach einem der Ansprüche 13 bis 16, **dadurch gekennzeichnet, dass** die eine Seite des Aufnahmegehäuses (6) mit einer formschlüssigen Einhängeverbindung (37) in der taschenförmigen Aufnahmeöffnung festgelegt ist.

18. Zerspanungswerkzeug nach einem der Ansprüche 1 bis 17, **dadurch gekennzeichnet, dass** die formschlüssige Verbindung zwischen dem kassettenartigen Aufnahmegehäuse (6) und der taschenförmigen Aufnahmeöffnung (10) als Rast- oder Klemm- oder Keil- oder Schraubverbindung ausgebildet ist.

## Geänderte Patentansprüche

### Geänderte Patentansprüche gemäss Regel 137(2) EPÜ.

1. Zerspanungswerkzeug (4, 5), welches mit seinem Schaft (2, 3) um seine Längsachse (41) drehend oder stossend und ziehend angetrieben ist und am Schaft (2, 3) weitere schaftseitige Neben-Zerspanungswerkzeugen (6, 7, 8 befestigt sind, wobei die Neben-Zerspanungswerkzeuge (6, 7, 8) am Schaft (2, 3) und/oder im spanabhebenden Arbeitsbereich des Zerspanungswerkzeugs (4, 5) auswechselbar befestigt sind und ein oder mehrere Neben-Zerspanungswerkzeuge (6, 7, 8) am Umfang des Schafts (2, 3) des Zerspanungswerkzeugs (4, 5) angeordnet sind, wobei jedes Neben-Zerspanungswerkzeug (6, 7, 8) in einem kassettenartigen Aufnahmegehäuse (6) aufgenommen ist, das in einer vertieften Aufnahmeöffnung (10) im Schaft (2, 3) des Zerspanungswerkzeugs (4, 5) lösbar befestigt ist **dadurch gekennzeichnet, dass** die mindestens eine Aufnahmeöffnung (10) als taschenförmige vertiefte, in radialer Richtung geöffnete und umfangsgeschlossene Aufnahmeöffnung (10) ausgebildet ist.

2. (neu) Zerspanungswerkzeug nach Anspruch 1, **dadurch gekennzeichnet, dass** eine formschlüssige Verbindung zwischen dem kassettenartigen Aufnahmegehäuse (6) und der taschenförmigen Aufnahmeöffnung (10) als Rast- oder Klemm- oder Keil- oder Schraubverbindung ausgebildet ist.

3. Zerspanungswerkzeug nach Anspruch 1, **dadurch gekennzeichnet, dass** die Schraubbefestigung durch mindestens eine Madenschraube (35) gebildet ist, die in einer schräg zur radialen Richtung (42) gerichteten Gewindebohrung (30) im Schaft (2, 3) eingeschraubt ist und mit ihrem bolzenseitigen Ende in eine schräg nach außen gerichtete, einseitig offene Befestigungsausnehmung (9) an der Seitenwand (18, 19) des Aufnahmegehäuses (6) eingreift.

4. Zerspanungswerkzeug nach einem der Ansprüche 1 bis 3, **dadurch gekennzeichnet, dass** die mindestens eine schaftseitige, einseitig offene Aufnahmeöffnung (10) im Schaft (2, 3) des Zerspanungswerkzeugs (4, 5) in radialer Richtung (42) zur Längsachse (41) des Schaftes ausgerichtet ist.

5. Zerspanungswerkzeug nach einem der Ansprüche 1 bis 3, **dadurch gekennzeichnet, dass** die mindestens eine schaftseitige, einseitig offene Aufnahmeöffnung (10) im Schaft (2, 3) des Zerspanungswerkzeugs (4, 5) in einem Winkel (43) zur radialen Richtung (42) zur Längsachse (41) des Schaftes ausgerichtet ist.

6. Zerspanungswerkzeug nach einem der Ansprüche 1 bis 5, **dadurch gekennzeichnet, dass** die mindestens eine schaftseitige Aufnahmeöffnung (10) im Arbeitsbereich (3) oder unterhalb des Einspannbereiches im Schaft (2) des Zerspanungswerkzeugs (4, 5) angeordnet ist.

7. Zerspanungswerkzeug nach einem der Ansprüche 1 bis 6, **dadurch gekennzeichnet, dass** mehrere Neben-Zerspanungswerkzeuge (6, 7, 8) gleichmässig verteilt am Umfang des Schafts (2, 3) des Zerspanungswerkzeugs (4, 5) auf einer gleichen Umfangslinie (38) angeordnet sind.

8. Zerspanungswerkzeug nach einem der Ansprüche 1 bis 7, **dadurch gekennzeichnet, dass** mehrere Neben-Zerspanungswerkzeuge (6, 7, 8) gleichmässig verteilt am Umfang des Schafts (2, 3) des Zerspanungswerkzeugs (4, 5) auf axial zueinander versetzten Umfangslinien (38, 39) angeordnet sind.

9. Zerspanungswerkzeug nach einem der Ansprüche 1 bis 8, **dadurch gekennzeichnet, dass** das Zerspanungswerkzeug (4, 5) ein Bohrer oder ein Fräser oder ein Entgratwerkzeug oder ein Drehmeissel oder ein Räumwerkzeug ist.

10. Zerspanungswerkzeug nach einem der Ansprüche 1 bis 9, **dadurch gekennzeichnet, dass** das Neben-Zerspanungswerkzeuge (6, 7, 8) als Entgratwerkzeug oder als Senkwerkzeug oder als Honwerkzeug oder als Nutstosswerkzeug ausgebildet sind.

11. Zerspanungswerkzeug nach einem der Ansprüche 1 bis 10, **dadurch gekennzeichnet, dass** an dessen Werkzeugspitze spanabhebende Werkzeuge fehlen.

12. Zerspanungswerkzeug nach einem der Ansprüche 1 bis 11, **dadurch gekennzeichnet, dass** das mindestens eine kassettenförmige Aufnahmegehäuse (6) für die Halterung des mindestens einen Neben-Zerspanungswerkzeugs (6, 7, 8) formschlüssig in der mindestens einen zugeordneten, schaftseitigen Aufnahmeöffnung (10) des Zerspanungswerkzeugs (4, 5) auswechselbar befestigt ist.

13. Zerspanungswerkzeug nach einem der Ansprüche 1 bis12, **dadurch gekennzeichnet, dass** zwei einander gegenüberliegende Befestigungsausnehmungen (30) im Schaft (2, 3) des Zerspanungswerkzeugs (4, 5) an jeweils einander gegenüberliegenden Seitenflächen des Aufnahmegehäuses (6) angeordnet sind, um eine linksseitige oder rechtsseitige Befestigung von Aufnahmegehäusen (6) in der schaftseitigen Aufnahmeöffnung (10) zu ermöglichen.

14. Zerspanungswerkzeug nach einem der Ansprüche 1 bis 13, **dadurch gekennzeichnet, dass** die Schraubbefestigung durch zwei, sich jeweils an der Stirnfläche (20, 21) des Aufnahmegehäuses (6) anlegende Gewindeschrauben (26, 29) gebildet ist.

15. Zerspanungswerkzeug nach einem der Ansprüche 1 bis16, **dadurch gekennzeichnet, dass** die eine Seite des Aufnahmegehäuses (6) mit einer formschlüssigen Einhängeverbindung (37) in der taschenförmigen Aufnahmeöffnung festgelegt ist.
